# EUROPÄISCHE PATENTSCHRIFT

(11) **EP 1 603 210 B1**
(45) Veröffentlichungstag und Bekanntmachung des Hinweises auf die Patenterteilung: **13.11.2013**
(21) Anmeldenummer: 05011582.3
(22) Anmeldetag: 30.05.2005
(51) Int. Cl.: H02G 3/32, B60R 16/02

(54) **Befestigungsschlaufe**
Fastening loop
Boucle de fixation

(30) Priorität: 02.06.2004 DE 102004026875; 22.03.2005 DE 102005013060
(43) Veröffentlichungstag der Anmeldung: 07.12.2005
(73) Patentinhaber: Volkswagen Aktiengesellschaft, 38440 Wolfsburg (DE)
(72) Erfinder: Kastner, Michael, 38446 Wolfsburg (DE)

(56) Entgegenhaltungen:
- EP-A- 0 932 234
- DE-A1- 19 746 526

## Beschreibung

Die Erfindung betrifft eine Befestigungsschlaufe zur Festlegung einer Leitung oder eines stabförmigen Teils auf einem Bauteil in einem Fahrzeug, insbesondere jedoch eines umhüllten elektrischen Leitungsstranges auf einem Auskleidungsteil.

Die Leitungsstränge eines Kabelbaumes bestehen aus einem Verbund mehrerer elektrischer Leitungen und dienen in einem Fahrzeug der elektrischen Verbindung von Bauteilen, Verbrauchern und Baugruppen. Die Leitungen sind dabei parallel verlaufend mit vorbestimmten Leitungsabgängen zusammengefasst und vorzugsweise durch ein Wickelband fixiert oder gegebenenfalls in einzelnen Vlies-Röhrchen oder in einem Isolierschlauch angeordnet. Die umhüllten Leitungsstränge sind üblicherweise mit Kunststoff- oder Metall-Halterungselementen auf einem formstabilen Auskleidungsteil befestigt. Aus der EP 08 13 277 A1 ist ein mit Klettbandabschnitten umwickelter Leitungsstrang bekannt, der auf einem entsprechend präparierten Auskleidungsteil angeordnet ist. Die Befestigungsanordnung erfordert die Fixierung eines Klettbandes auf dem Auskleidungsteil und auch die Fixierung der Klettbandabschnitte auf dem Leitungsstrang.

Gegenstand der DE 198 27 862 C2 ist ein Verfahren zur Befestigung eines Bauteils, insbesondere eines Leitungsstranges auf einem Auskleidungsteil eines Kraftfahrzeugs mit eine Kontaktfläche aufweisenden Befestigungsmitteln. Dabei besteht die Kontaktfläche aus einem mit dem Auskleidungsteil thermisch verschweißbarem Material, und das Bauteil wird mit den Befestigungsmitteln durch zumindest punktuelles thermisches Verschweißen dieser Kontaktfläche mit dem Auskleidungsteil auf diesem befestigt. Das jeweilige Befestigungsmittel kann ein Kabelbinder und/ oder eine Folie sein, durch die die Leitungen zumindest teilweise radial umfasst und dabei zugleich zu dem Leitungsstrang zusammengefasst werden. Eine schlaufenartige Ausbildung der Befestigungsmittel ist dabei möglich. Weitere, d.h. separate Befestigungsmittel werden nicht benötigt. Allerdings kann eine Vorkonfektionierung eines Leitungsstranges oder Kabelbaumes mit derartigen Befestigungsmitteln an vorbestimmten Stellen in einer vorbestimmten Anordnung nur dann vorgenommen werden, wenn die Leitungen an der Innenseite des Befestigungsmittels fixiert sind. Dabei ist eine Prozesssicherheit aber nur dann gegeben, wenn die Befestigungsmittel die Leitungen vollständig umschließen und an diesen fixiert sind, was einen technologischen Mehraufwand erfordert. Sind die Leitungen hingegen lose in dem am Befestigungsmittel ausgebildeten Kanal angeordnet, ist eine feste Verbindung zwischen dem Befestigungsmittel und den Leitungen nicht gegeben und eine Vorkonfektionierung nicht prozesssicher auszuführen, da das/ die Befestigungsmittel nicht in der vorbestimmten Zu- und Anordnung an der Leitung verbleiben.

Aus der DE 197 46 526 ist ein Kabelbaum für ein Fahrzeug, gebildet aus mehreren isolierten elektrischen Leitungen, bekannt. Die Leitungen des Hauptstranges sind mit einer im Wesentlichen parallel zum Hauptstrang ausgerichteten Folie zusammengefasst. Die Folie ist dabei quer zu den Leitungen um diese geschlagen und an abstehenden und übereinanderliegenden Randbereichen miteinander verbunden. Die Leitungen werden über weite Bereiche mit einer Folie verbunden um später an einem Verkleidungsteil befestigt zu werden. Die Folie trägt dabei zur Stabilität des Kabelbaums bei.
Es ist Aufgabe der Erfindung, eine Befestigungsschlaufe nach dem Oberbegriff des Anspruchs 1 zu schaffen, mit der die Festlegung einer Leitung auf einem Auskleidungsteil in einem Fahrzeug vereinfacht und erleichtert ist.

Diese Aufgabe wird bei einer Befestigungsschlaufe nach dem Oberbegriff des Anspruchs 1 durch dessen kennzeichnende Merkmale gelöst. Vorteilhafte Ausgestaltungen sind in den Unteransprüchen aufgeführt.

Die Erfindung besteht darin, dass bei einer einen Leitungsbereich umschließenden Befestigungsschlaufe zur Festlegung einer Leitung auf einem Auskleidungsteil eines Fahrzeugs, die aus einem Folienstück eines schweißbaren Materials gebildet ist und eine den Leitungsbereich umschließende Aufnahme und eine Befestigungslasche zur Anordnung am Auskleidungsteil aufweist, die Aufnahme durch Umschlagen des Folienstückes quer zur Leitung gebildet und mit einem die Leitung in radialer und axialer Richtung fixierenden Mittel versehen und die Befestigungslasche durch wenigstens einen in im wesentlichen radialer Richtung von der Leitung abstehenden Endbereich des Folienstückes gebildet ist. Die Aufnahme ist dabei mit einem die Leitung in radialer und axialer Richtung fixierenden Mittel versehen, das eine leitungsseitig auf dem Folienstück angeordnete, zumindest partielle Klebeschicht ist. Das Folienstück ist in rechteckiger- oder quadratförmiger Gestalt aus einer Folienbahn entnehmbar, wobei das Folienstück von einer ein- oder mehrteiligen Vorratsrolle eines entsprechend seiner Gestalt mit Sollbruchlinien und/oder einer Perforation sowie im Abstand angeordneten und mit einer Folie abgedeckten Haftklebestreifen versehenen Bandmaterials einzeln entnehmbar ist.. Eine solche Befestigungsschlaufe ist auf einfache Weise an einer Leitung, beispielsweise auch an einer Flüssigkeitsleitung, in einem vorbestimmten Leitungsbereich verdrehfest und in axialer Richtung unverschiebbar anordbar, so dass diese eine definierte Position an der Leitung einnehmen kann. Damit ist eine Leitung, insbesondere jedoch ein Leitungsstrang oder ein Kabelbaum, ohne Werkzeug und aufwandsreduziert vorkonfektionierbar und mit den Befestigungsschlaufen als Vormontageeinheit technologisch erleichtert handhabbar, wodurch Fertigungszeit eingespart werden kann. Der Materialeinsatz ist gering. Aus einem rechteck- oder quadratförmigen Folienstück gebildete Befestigungsschlaufen können zusammenhängend als Bandmaterial zur Verfügung gestellt werden. Dabei kann das Bandmaterial mit einer der Gestalt des Folienstückes entsprechenden Perforierung oder Sollbruchlinienausbildung versehen und einzeln erleichtert entnehmbar sein, wobei das Bandmaterial zweckmäßigerweise auch mit den Haftklebestreifen versehen ist.

Als Folienmaterial wird vorteilhaft ein flexibler Kunststoff eingesetzt, insbesondere ein Polypropylen-Vlies. Leitungsseitig ist die Befestigungsschlaufe zumindest partiell mit einer Klebeschicht versehen, wobei diese partielle Klebeschicht wiederum vorteilhaft ein Haftklebestreifen ist, der in Leitungsquerrichtung zur Anordnung gelangt und der einen nur schmalen Leitungsbereich im vorbestimmten Anordnungsbereich der Befestigungsschlaufe in radialer Richtung teilweise umschließt und die Klebeverbindung zwischen der Aufnahme und der Leitung herstellt. Dabei ist der Haftklebestreifen wesentlich schmaler als die Befestigungsschlaufe, womit der Einsatz von Klebematerial reduziert wird. Sind die Endbereiche des Folienstückes klebeschichtfrei, ist der Schweißvorgang umweltfreundlicher, da bei diesem dann kein Kleber verdampfen kann.

Die Befestigungslasche kann vorteilhaft durch die beiden Endbereiche der die Leitung einschließenden Aufnahme gebildet sein, indem diese, in im Wesentlichen radialer Richtung von der Leitung abstehend, aneinander angeordnet sind. Wenn der Haftklebestreifen wenigstens in einen dieser Endbereiche erstreckt ist, können die beiden Endbereiche beim Anordnen der Befestigungsschlaufe an der Leitung aneinander fixiert werden, so dass die Befestigungslasche doppellagig und somit stabiler ist und auch der gehalterte Leitungsstrang zuverlässiger am Auskleidungsteil festgelegt ist.

Quer zu diesem ersten Haftklebestreifen kann am Folienstück im vorgesehenen Aufnahmebereich für die Leitung ein weiterer Haftklebestreifen angeordnet sein. Eine derartige Ausführung empfiehlt sich insbesondere bei dickeren Leitungssträngen bzw. umfangreicheren Kabelbäumen, um diese in axialer Leitungsrichtung zuverlässig unverschiebbar festzulegen. Überdies wird mit einem derart ausgerüsteten Folienstück die Prozesssicherheit bei der Vorkonfektionierung erhöht, weil damit eine Anordnung desselben an der Leitung auch in einer um 90° verdrehten Position erfolgen kann.

Die Erfindung wird nachfolgend anhand eines Ausführungsbeispiels erläutert. In den zugehörigen Zeichnungen zeigen:
- Fig. 1:: ein von einer Vorratsrolle abgetrenntes quadratförmiges Folienstück,
- Fig. 2:: dieses in einer an einen Leitungsstrang angelegten Position,
- Fig. 3:: dieses zu einer Befestigungsschlaufe am Leitungsstrang ausgebildet,
- Fig. 4:: einen Kabelbaum mit angeordneten Befestigungsschlaufen, schematisch und verkleinert,
- Fig. 5:: den an einem Dachhimmel festgelegten Kabelbaum und
- Fig. 6:: einen Schnitt IV - IV durch eine Befestigungsschlaufe, vergrößert.

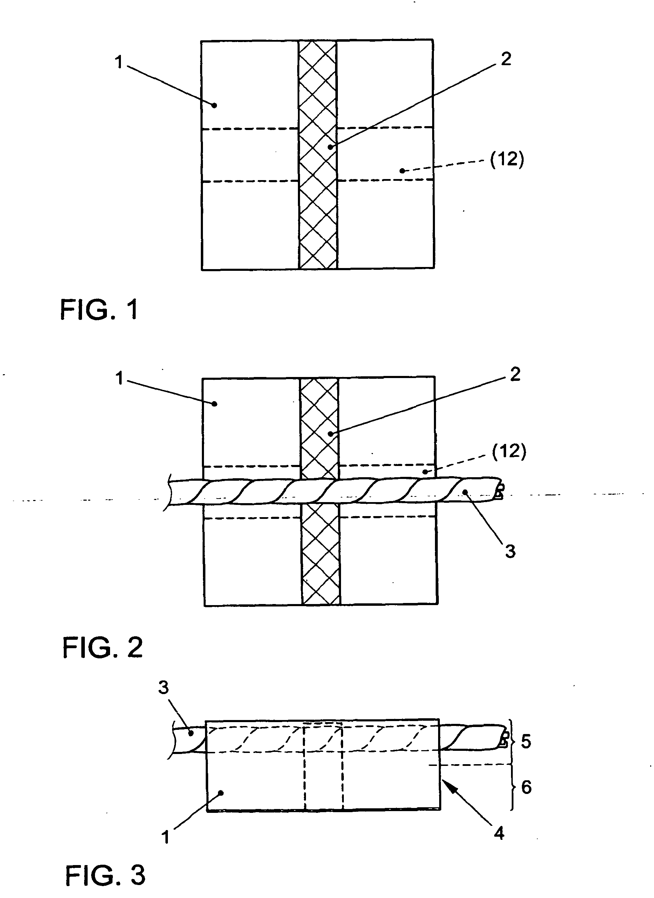

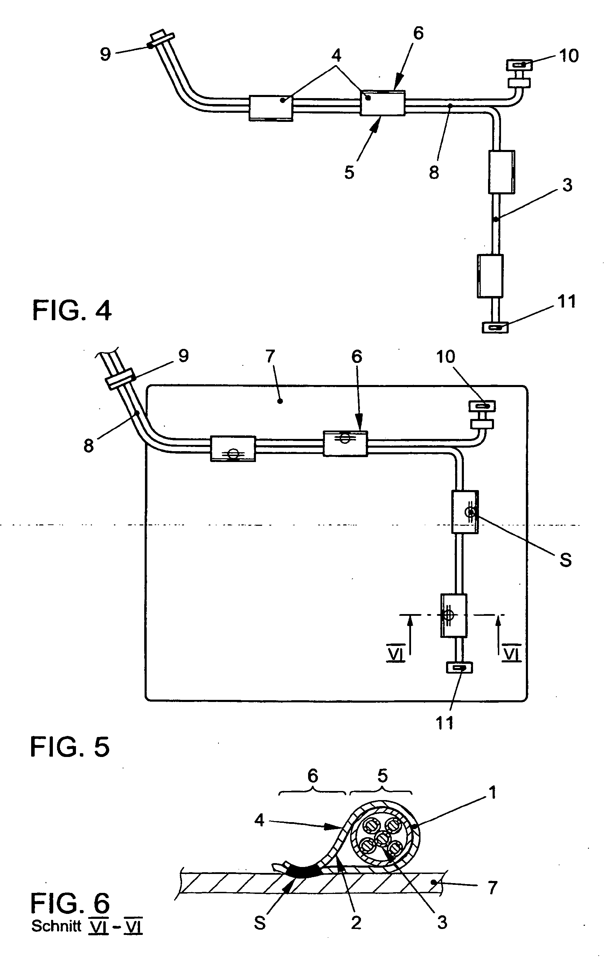

In Fig. 1 ist ein quadratisches Folienstück 1 aus einem Polypropylen-Vlies gezeigt, das mit einem Haftklebestreifen 2 versehen ist, dessen Abdeck- und Schutzfolie bereits abgezogen ist. Dieser Haftklebestreifen 2 ist dabei parallel zu einer Seitenkante des Folienstückes 1 mittig angeordnet und überdeckt dieses dabei in seiner gesamten Ausdehnung. Das Folienstück 1 wird, wie in Fig. 2 gezeigt ist, mittig und derart zur Anlage an einem umwickelten Leitungsstrang in einem vorbestimmten Leitungsstrangbereich 3 gebracht, dass der Haftklebestreifen 2 quer zu diesem zur Anordnung gelangt. Danach werden die beiden über den Leitungsstrang 3 hinausragenden Endbereiche des Folienstückes 1 unter Einschluss des Leitungsstrangbereiches 3 in einer vorbestimmten Richtung so weit aufeinander zu umgeschlagen, bis diese sich berühren und mit den dabei zur gegenseitigen Anlage gelangenden Endbereichen des Haftklebestreifens 2 eine Befestigungsschlaufe 4 bilden, die in Fig. 3 in einer Draufsicht und in einem Schnitt VI - VI im verschweißten Zustand in Fig. 6 dargestellt ist. Dabei wird das Folienstück 1 auch am Leitungsstrangbereich 3 im Bereich des Haftklebestreifens 2 klebefixiert.

Die gebildete Befestigungsschlaufe 4 weist eine den Leitungsstrangbereich 3 einschließende Aufnahme 5 und eine aus den beiden aneinander liegenden Endbereichen des Folienstückes 1 gebildete Befestigungslasche 6 zur Anordnung an einem Dachhimmel aus Kunststoff (7, Fig. 5 und 6) auf, wobei der Leitungsstrangbereich 3 sowohl in radialer als auch in axialer Richtung in der Aufnahme 5 fixiert ist.

In Fig. 4 ist ein Kabelbaum 8 mit Steckverbindern 9, 10 und 11 dargestellt, an dem in vorbestimmten Positionen mehrere solcher Befestigungsschlaufen 4, in gleicher Ebene ausgerichtet, auf die vorbeschriebene Weise fest angeordnet sind. Diese Vormontageeinheit wird in einer vorbestimmte Position auf dem in Fig. 5 gezeigten Dachhimmel 7 angeordnet und durch Verschweißen der Befestigungslaschen 6 mit dem Dachhimmel 7 (Schweißverbindung S) mittels Ultraschall mit einem Ultraschallschweißgerät festgelegt. Die aus dem Dachhimmel 7 und dem Kabelbaum 8 gebildete Montageeinheit wird im Fahrzeug montiert und über den Steckverbinder 9 an das Bordnetz angeschlossen.

Der Schnitt VI - VI in Fig. 6 zeigt die eine den Kabelbaum 8 halternde und mit dem Dachhimmel 7 verschweißte Befestigungsschlaufe 4. Es ist zu erkennen, dass der umwickelte Leitungsstrangbereich 3 mit dem Haftklebestreifen 2 in direktem Kontakt steht und durch diesen in radialer Richtung fixiert ist. Zwangsläufig ergibt sich auch eine Fixierung in axialer Richtung.

In den Fig. 1 und 2 ist ein weiterer, auf dem Folienstück 1 angeordneter Haftklebestreifen 12 angedeutet, der quer zum Haftklebestreifen 2 und ebenfalls mittig angeordnet ist. Diese Ausführung ist eine Alternative zur vorbeschriebenen Ausführung. Dabei liegt der Haftklebestreifen 12 im Anlagebereich des Folienstückes 1 am Leitungsstrang (3) bzw. im Anlagebereich der Aufnahme 5 der gebildeten Befestigungsschlaufe 4 klebefixierend an und erhöht die Haftkraft derselben in axialer Richtung.

### Bezugszeichenliste

- 1: Folienstück
- 2: Haftklebestreifen
- 3: Leitungsstrangbereich
- 4: Befestigungsschlaufe
- 5: Aufnahme
- 6: Befestigungslasche
- 7: Dachhimmel
- 8: Kabelbaum
- 9: Steckverbinder
- 10: Steckverbinder
- 11: Steckverbinder
- 12: Haftklebestreifen
- S: Schweißverbindung

## Patentansprüche

1. Befestigungsschlaufe zur Festlegung wenigstens einer Leitung (3) oder eines stabförmigen Teils auf einem Bauteil (7), insbesondere einem Fahrzeugteil, gebildet aus einem Folienstück (1) eines schweißbaren Materials, mit einer einen Bereich der Leitung oder des stabförmigen Teils einschließenden Aufnahme (5) und einer Befestigungslasche (6) zur Anordnung an dem Bauteil (7), insbesondere Fahrzeugteil, wobei die Aufnahme (5) durch Umschlagen des Folienstückes (1) quer zur Leitung (3) gebildet Ist und die Befestigungslasche (6) durch wenigstens einen in im wesentlichen radialer Richtung von der Leitung (3) abstehenden Bereich des Folienstückes (1) gebildet ist, **dadurch gekennzeichnet, dass** die Aufnahme (5) mit einem die Leitung (3) in radialer und axialer Richtung fixierenden Mittel versehen ist, dass das Mittel eine leitungsseitig auf dem Folienstück (1) angeordnete, zumindest partielle Klebeschicht ist, dass das Folienstück (1) in rechteck- oder quadratförmiger Gestalt aus einer Folienbahn entnehmbar ist, und dass das Folienstück (1) von einer ein- oder mehrreihigen Vorratsrolle eines entsprechend seiner Gestalt mit Sollbruchlinien und/oder einer Perforation sowie im Abstand angeordneten und mit einer Folie abgedeckten Haftklebestreifen (2, 12) versehenen Bandmaterials einzeln entnehmbar ist.

2. Befestigungsschlaufe nach Anspruch 1, **dadurch gekennzeichnet, dass** die partielle Klebeschicht wenigstens ein Haftklebestreifen (2) für ein teilweises Umschließen des aufgenommenen Leitungsbereiches (3) in radialer Richtung ist.

3. Befestigungsschlaufe nach Anspruch 2, **dadurch gekennzeichnet, dass** die partielle Klebeschicht einen weiteren Haftklebestreifen (12) umfaßt, der quer zu dem ersten Haftklebestreifen (2) und im Bereich der vorgesehenen Aufnahme (5) für die Leitung (3) angeordnet ist.

4. Befestigungsschlaufe nach Anspruch 2 oder 3, **dadurch gekennzeichnet, dass** die Befestigungslasche (6) durch die beiden aneinander angeordneten Endbereiche der die Leitung (3) einschließenden Aufnahme (5) gebildet ist, und dass der wenigstens eine Haftklebestreifen (2) bis in wenigstens einen der beiden Endbereiche erstreckt ist.

5. Leitung oder stabförmiges Teil zur Festlegung an einem Bauteil (7), insbesondere einem Fahrzeugteil, mittels wenigstens einer Befestigungsschlaufe (4) aus einem Folienstück (1) eines schweißbaren Materials, wobei die Befestigungsschlaufe (4) eine einen Bereich der Leitung oder des stabförmigen Teils einschließende Aufnahme (5) und eine Befestigungslasche (6) zur Anordnung an dem Bauteil (7), insbesondere Fahrzeugteil, aufweist, wobei die Befestigungslasche (6) durch wenigstens einen in im wesentlichen radialer Richtung von der Leitung (3) oder dem stabförmigen Teil abstehenden Bereich des Folienstücks (1) gebildet ist, **dadurch gekennzeichnet, dass** die Aufnahme (5) mit einem die Leitung (3) oder das stabförmige Teil in radialer und axialer Richtung fixierenden Mittel versehen ist, dass das fixierende Mittel eine leitungsseitig auf dem Folienstück (1) angeordnete, zumindest partielle Klebeschicht ist, dass die Klebeschicht wenigstens ein Haftklebestreifen (2) für zumindest ein teilweises Umschließen des aufgenommenen Leitungsbereiches (3) in radialer Richtung ist, dass die Befestigungslasche (6) durch die beiden aneinander angeordneten Endbereiche der die Leitung (3) oder das stabförmige Teil einschließenden Aufnahme (5) gebildet ist, dass der wenigstens eine Haftklebestreifen (2) bis in wenigstens einen der beiden Endbereiche erstreckt ist, dass das Folienstück (1) in rechteck- oder quadratförmiger Gestalt aus einer Folienbahn entnehmbar ist, und dass das Folienstück (1) von einer ein- oder mehrreihigen Vorratsrolle eines entsprechend seiner Gestalt mit Sollbruchlinien und/oder einer Perforation sowie im Abstand angeordneten und mit einer Folie abgedeckten Haftklebestreifen (2, 12) versehenen Bandmaterials einzeln entnehmbar ist.

6. Verfahren zur Befestigung mindestens einer Leitung oder eines stabförmigen Teils an einem Bauteil, insbesondere eines Fahrzeuges, bei dem die Leitung (3) oder das stabförmige Teil mit wenigstens einer diese(s) umschließenden und eine Befestigungslasche (6) ausbildenden Befestigungsschlaufe (4) aus einem Folienstück eines schweißbaren Materials mit der Befestigungslasche (6) an dem Bauteil befestigt wird, bei dem die Befestigungsschlaufe (4) in vorbestimmter Position und mit der Befestigungslasche (6) in eine vorbestimmte radiale Richtung weisend, mit einem diese (4) an der Leitung (3) bzw. dem stabförmigen Teil in radialer und axialer Richtung fixierenden Mittel fest angeordnet wird und bei dem die derart gebildete Vormontageeinheit am Bauteil (7) befestigt wird, wobei das fixierende Mittel eine leitungsseitig auf dem Folienstück (1) angeordnete, zumindest partielle Klebeschicht ist, wobei die Klebeschicht wenigstens ein Haftklebestreifen (2) für zumindest ein teilweises Umschließen des aufgenommenen Leitungsbereiches (3) in radialer Richtung ist, wobei die Befestigungslasche (6) durch die beiden aneinander angeordneten Endbereiche der die Leitung (3) oder das stabförmige Teil einschließenden Aufnahme (5) gebildet ist, wobei der wenigstens eine Haftklebestreifen (2) bis in wenigstens einen der beiden Endbereiche erstreckt ist, wobei das Folienstück (1) in rechteck- oder quadratförmiger Gestalt aus einer Folienbahn entnommen wird, und wobei das Folienstück (1) von einer ein- oder mehrreihigen Vorratsrolle eines entsprechend seiner Gestalt mit Sollbruchlinien und/oder einer Perforation sowie im Abstand angeordneten und mit einer Folie abgedeckten Haftklebestreifen (2, 12) versehenen Bandmaterials einzeln entnommen wird.

## Claims

1. Fastening loop for fastening at least one line (3) or a rod-shaped part on a component (7), in particular a vehicle part, formed from a foil piece (1) of a weldable material, with a receptacle (5) enclosing a region of the line or of the rod-shaped part and with a fastening lug (6) for arranging on the component (7), in particular vehicle part, wherein the receptacle (5) is formed by folding over the foil piece (1) transversally with respect to the line (3) and the fastening lug (6) is formed by at least one region of the foil piece (1) projecting in a substantially radial direction from the line (3), **characterized in that** the receptacle (5) is provided with a means which fixes the line (3) in the radial and axial direction, **in that** the means is an at least partial adhesive layer arranged on the foil piece (1) on the line side, **in that** the foil piece (1) can be removed in rectangular or square form from a foil web, and **in that** the foil piece (1) can be removed individually from a single- or multi-row supply roll of a band material provided, corresponding to its form, with predetermined breaking lines and/or a perforation and with pressure-sensitive adhesive strips (2, 12) arranged at a distance and covered with a foil.

2. Fastening loop according to Claim 1, **characterized in that** the partial adhesive layer is at least one pressure-sensitive adhesive strip (2) for partially enclosing the received line region (3) in the radial direction.

3. Fastening loop according to Claim 2, **characterized in that** the partial adhesive layer comprises a further pressure-sensitive adhesive strip (12) which is arranged transversally with respect to the first pressure-sensitive adhesive strip (2) and in the region of the provided receptacle (5) for the line (3).

4. Fastening loop according to Claim 2 or 3, **characterized in that** the fastening lug (6) is formed by the two end regions, arranged against one another, of the receptacle (5) enclosing the line (3), and **in that** the at least one pressure-sensitive adhesive strip (2) is extended into at least one of the two end regions.

5. Line or rod-shaped part for fixing on a component (7), in particular a vehicle part, by means of at least one fastening loop (4) consisting of a foil piece (1) of a weldable material, wherein the fastening loop (4) has a receptacle (5) enclosing a region of the line or of the rod-shaped part and a fastening lug (6) for arranging on the component (7), in particular vehicle part, wherein the fastening lug (6) is formed by at least one region of the foil piece (1) projecting in a substantially radial direction from the line (3) or the rod-shaped part, **characterized in that** the receptacle (5) is provided with a means which fixes the line (3) or the rod-shaped part in the radial and axial direction, **in that** the fixing means is an at least partial adhesive layer arranged on the foil piece (1) on the line side, **in that** the adhesive layer is at least one pressure-sensitive adhesive strip (2) for at least partially enclosing the received line region (3) in the radial direction, **in that** the fastening lug (6) is formed by the two end regions, arranged against one another, of the receptacle (5) enclosing the line (3) or the rod-shaped part, **in that** the at least one pressure-sensitive adhesive strip (2) is extended into at least one of the two end regions, **in that** the foil piece (1) can be removed in a rectangular or square form from a foil web, and **in that** the foil piece (1) can be removed individually from a single- or multi-row supply roll of a band material which is provided, corresponding to its form, with predetermined breaking lines and/or a perforation and with pressure-sensitive adhesive strips (2, 12) arranged at a distance and covered with a foil.

6. Method for fastening at least one line or a rod-shaped part on a component, in particular of a vehicle, in which the line (3) or the rod-shaped part is fastened to the component by a fastening lug (6) by means of at least one fastening loop (4), which encloses said line or rod-shaped part and forms the fastening lug (6), consisting of a foil piece of a weldable material, in which method the fastening loop (4), in a predetermined position and with the fastening lug (6) pointing in a predetermined radial direction, is fixedly arranged with a means which fixes said fastening loop (4) on the line (3) or on the rod-shaped part in the radial and axial direction and in which method the preassembly unit formed in this way is fastened to the component (7), wherein the fixing means is an at least partial adhesive layer arranged on the foil piece (1) on the line side, wherein the adhesive layer is at least one pressure-sensitive adhesive strip (2) for at least partially enclosing the received line region (3) in the radial direction, wherein the fastening lug (6) is formed by the two end regions, arranged against one another, of the receptacle (5) enclosing the line (3) or the rod-shaped part, wherein the at least one pressure-sensitive adhesive strip (2) is extended into at least one of the two end regions, wherein the foil piece (1) is removed in rectangular or square form from a foil web, and wherein the foil piece (1) is removed individually from a single- or multi-row supply roll of a band material which is provided, corresponding to its form, with predetermined breaking lines and/or a perforation and with pressure-sensitive adhesive strips (2, 12) arranged at a distance and covered with a foil.

## Revendications

1. Boucle de fixation destinée à fixer au moins un conducteur (3) ou une pièce en forme de barreau sur un composant (7), en particulier une pièce de véhicule,
la boucle étant formée d'un morceau de feuille (1) en un matériau soudable et présentant un logement (5) qui entoure une partie du conducteur ou de la pièce en forme de barreau et une patte de fixation (6) destinée à être placée sur le composant (7), en particulier la pièce de véhicule,
le logement (5) étant formé en rabattant le morceau de feuille (1) transversalement par rapport au conducteur (3) et la patte de fixation (6) étant formée par au moins une partie du morceau de feuille (1) qui déborde du conducteur (3) dans une direction essentiellement radiale, ,
**caractérisée en ce que**
le logement (5) est doté d'un moyen fixant le conducteur (3) dans la direction radiale et la direction axiale,
**en ce que** le moyen est une couche au moins partielle d'adhésif disposée sur le morceau de feuille (1) du côté du conducteur,
**en ce que** le morceau de feuille (1) en forme de rectangle ou de carré peut être prélevé dans une nappe de feuille et
**en ce que** les morceaux de feuille (1) peuvent être prélevés un à un dans un rouleau de réserve à une ou plusieurs rangées doté de lignes de rupture préférentielle et/ou d'une perforation correspondant à leur forme et disposées à distance mutuelle ainsi que d'un ruban adhésif (2, 12) recouvert d'un film.

2. Boucle de fixation selon la revendication 1, **caractérisée en ce que** la couche adhésive partielle est au moins un ruban adhésif (2) permettant d'entourer partiellement dans la direction radiale la partie (3) du conducteur qui est repris.

3. Boucle de fixation selon la revendication 2, **caractérisée en ce que** la couche adhésive partielle comporte un autre ruban adhésif (12) disposé transversalement par rapport au premier ruban adhésif (2) au niveau du logement (5) prévu pour le conducteur (3).

4. Boucle de fixation selon les revendications 2 ou 3, **caractérisée en ce que** la patte de fixation (6) est formée par les deux parties d'extrémité disposées l'une contre l'autre du logement (5) entourant le conducteur (3) et **en ce que** le ou les rubans adhésifs (2) s'étendent au moins jusqu'à l'une des deux parties d'extrémité.

5. Conducteur ou pièce en forme de barreau destinés à être fixés sur un composant (7), en particulier une pièce de véhicule, au moyen d'au moins une boucle de fixation (4) formée d'un morceau de feuille (1) en un matériau soudable, la boucle de fixation (4) présentant un logement (5) qui entoure une partie du conducteur ou de la pièce en forme de barreau et une patte de fixation (6) destinée à être placée sur le composant (7), en particulier la pièce de véhicule,
la patte de fixation (6) étant formée par au moins une partie du morceau de feuille (1) qui déborde du conducteur (3) dans une direction essentiellement radiale,
**caractérisés en ce que**
le logement (5) est doté d'un moyen fixant le conducteur (3) dans la direction radiale et la direction axiale,
**en ce que** le moyen de fixation est une couche au moins partielle d'adhésif disposée sur le morceau de feuille (1) du côté du conducteur,
**en ce que** la couche d'adhésif est au moins un ruban adhésif (2) permettant d'entourer partiellement dans la direction radiale la partie (3) du conducteur qui est repris,
**en ce que** la patte de fixation (6) est formée par les deux parties d'extrémité disposées l'une contre l'autre du logement (5) entourant le conducteur (3),
**en ce que** le ou les rubans adhésifs (2) s'étendent au moins jusqu'à l'une des deux parties d'extrémité,
**en ce que** le morceau de feuille (1) en formé de rectangle ou de carré peut être prélevé dans une nappe de feuille et
**en ce que** les morceaux de feuille (1) peuvent être prélevés à un à un dans un rouleau de réserve à une ou plusieurs rangées doté de lignes de rupture préférentielle et/ou d'une perforation correspondant à leur forme et disposées à distance mutuelle et d'un ruban adhésif (2, 12) recouvert d'un film.

6. Procédé de fixation d'au moins un conducteur ou une pièce en forme de barreau sur un composant, en particulier d'un véhicule, dans lequel
le conducteur (3) ou la pièce en forme de barreau sont fixés à l'aide d'une patte de fixation (6) sur le composant par au moins une boucle de fixation (4) en un morceau de feuille de matériau soudable qui les entoure et qui forme la patte de fixation (6),
dans lequel la boucle de fixation (4) est fixée en position prédéterminée et avec la patte de fixation (6) orientée dans une direction radiale prédéterminée par un moyen qui fixe cette boucle (4) sur le conducteur (3) ou la pièce en forme de barreau dans la direction radiale et la direction axiale,
l'unité pré-montée ainsi formée est fixée sur le composant (7),
le moyen de fixation étant une couche adhésive au moins partielle disposée du côté du conducteur sur le morceau de feuille (1),
la couche adhésive étant au moins un ruban adhésif (2) destiné à entourer au moins partiellement dans la direction radiale la partie (3) du conducteur reprise,
la patte de fixation (6) étant formée par les deux parties d'extrémité disposées l'une sur l'autre du logement (5) qui entoure le conducteur (3) ou la pièce en forme de barreau,
le ou les rubans adhésifs (2) s'étendant au moins jusqu'à l'une des deux parties d'extrémité,
le morceau de feuille (1) de forme rectangulaire ou carrée étant prélevé dans une nappe de feuille,
les morceaux de feuille (1) étant prélevés un à un dans un rouleau de réserve à une ou plusieurs rangées doté de lignes de rupture préférentielle et/ou d'une perforation correspondant à leur forme et disposées à distance mutuelle ainsi que d'un ruban adhésif (2, 12) recouvert d'un film.
